(19) Europäisches Patentamt / European Patent Office / Office européen des brevets

(11) **EP 4 368 956 B1**

(12) **EUROPEAN PATENT SPECIFICATION**

(45) Date of publication and mention
of the grant of the patent:
**23.04.2025 Bulletin 2025/17**

(21) Application number: **22206712.6**

(22) Date of filing: **10.11.2022**

(51) International Patent Classification (IPC):
*G01K 3/10* (2006.01)    *G01K 15/00* (2006.01)
*G01K 17/06* (2006.01)

(52) Cooperative Patent Classification (CPC):
**G01K 15/00; G01K 3/10; G01K 15/005;
G01K 17/06**

(54) **METHOD OF MASS-MANUFACTURING TEMPERATURE SENSORS**

VERFAHREN ZUR MASSENHERSTELLUNG VON TEMPERATURSENSOREN

PROCÉDÉ DE FABRICATION EN SÉRIE DE CAPTEURS DE TEMPÉRATURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**15.05.2024 Bulletin 2024/20**

(73) Proprietor: **Kamstrup A/S
8660 Skanderborg (DK)**

(72) Inventors:
• **Harbo, Lasse Sloth
8660 Skanderborg (DK)**

• **Hyttel, Mads Wraa
8660 Skanderborg (DK)**

(74) Representative: **Patentanwälte Hemmer Lindfeld
Frese
Partnerschaft mbB
Wallstraße 33a
23560 Lübeck (DE)**

(56) References cited:
**US-A1- 2007 268 952    US-B1- 6 225 141
US-B1- 8 851 744**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure is directed to a method of mass-manufacturing temperature sensors at an industrial scale, in particular as part of a method of mass-manufacturing thermal energy meters at an industrial scale. In particular, the present disclosure is directed to a method of mass-manufacturing metal-sheathed industrial platinum resistance thermometers (PRTs) and platinum temperature sensors according to Danish standard DS/EN 60751 2nd edition of 14 Oct 2008.

BACKGROUND

Thermal energy meters are typically installed by utility providers at consumer sites of a district heating/cooling system to determine consumption of thermal energy for billing the respective consumer site. They can be used as heat meters or as cooling meters depending on whether the thermal energy is provided as heating energy or as cooling energy. The thermal energy is typically provided by a heated or chilled fluid flowing through a pipe to a consumer element, e.g. a heat exchanger. Usually, the fluid delivers the thermal energy in an inlet pipe of the district heating/cooling system to the consumer element and returns with less/more thermal energy in an outlet pipe of the district heating/cooling system.

In order to determine the consumed thermal energy over a certain period of time, a thermal energy meter needs to measure, continuously or regularly over said consumption period the fluid flow, the temperature upstream of the consumer element, and the temperature downstream of the consumer element. The following formula may be applied:

$$Q = \int_{t=0}^{t=\tau} A \cdot v \cdot \rho \cdot c_w \cdot \left(T_f - T_r\right) dt$$

wherein Q is the consumed energy over the time period $\tau$, A is the pipe cross section where the fluid velocity v is measured, $\rho$ is the fluid density, $c_w$ is the specific heat capacity of the fluid, $T_f$ is the fluid temperature in the inlet pipe, and $T_r$ is the fluid temperature in the outlet pipe. The fluid flow can be denoted by $\dot{V} = A \cdot v$. The consumed energy Q may be a positive value for supplying heating energy and a negative value for supplying cooling energy.

Therefore, a thermal energy meter typically comprises the following components: a flow sensor, a calculator, and a pair of two temperature sensors. One of the temperature sensors may be installed at the inlet pipe while the other one of the temperature sensors may be installed at the outlet pipe. It should be noted that modern thermal energy meters are preferably battery powered and equipped with a signal transmitter for sending consumption data wirelessly to a head-end system (HES) of the utility provider for billing purposes.

As explained in EP 2 994 724 B1, consumption meters that are used for billing purposes are subject to regulatory demands. Such regulatory demands may be demands to the precision and reliability of the measurements. Regulatory demands require that thermal energy meters are individually tested, verified and certified according to national or international regulations before customers can be billed based on a measured consumed amount of thermal energy.

Therefore, the temperature sensors used in a thermal energy meter must satisfy high quality criteria. For example, Danish standard DS/EN 1434-1:2022 as released on 13 September 2022 demands certain routine production tests to be carried out for each manufactured temperature sensor and certain type tests to be carried out only for samples of each particular design and range of temperature sensor type. Production tests are part of the production line, whereas type tests are carried out for samples under laboratory conditions. For example, US 6,225,141 B1 describes a plurality of individual temperature sensor cells on a single printed circuit board with a separate temperature detector mounted in each cell. US 8,851,744 B1 describes a calibrator for calibrating a compatible heat transfer meter with a temperature-controlled reference thermowell and a reference temperature sensor. US 2007/268952 A1 describes a method for calibrating a thermometer with a primary temperature sensor for determining the temperature of a target.

It is an object of the present invention to provide a method of mass-manufacturing temperature sensors at an industrial scale, wherein the method allows verifying further quality criteria for each manufactured temperature sensor.

SUMMARY

In accordance with a first aspect of the present disclosure, a method of mass-manufacturing temperature sensors is provided, wherein the method comprises the following steps:

- assembling or receiving said temperature sensors, wherein an individual identifier is associated with each of the temperature sensors;
- immersing said temperature sensors into at least one thermostatic bath having a pre-determined reference temperature;

- logging a set of measurement values of each temperature sensor during immersing into at least one of the at least one thermostatic bath;
- determining an individual response time value based on the set of measurement values for each of the temperature sensors; and
- logging the determined individual response time value associated with the individual identifier.

The temperature sensors may be assembled as part of the disclosed method of mass-manufacturing temperature sensors. Alternatively, the assembly process may be outsourced and performed by one or more suppliers. In this case, the temperature sensors are received from a supplier in a fully assembled state. The individual identifier may, for example, be a serial number, a bar code, an RFID tag, and/or a similar identifier. The temperature sensors may be analogue temperature sensors, e.g. resistance temperature detectors (RTDs), or digital temperature sensors. In case the temperature sensors are digital temperature sensors, a further option may be to store the identifier as digital information in a memory of each temperature sensor. In any case, the individual identifier may, for example, be added to the temperature sensor as a readable physical label tag, or a laser print on the sensor cable. The individual identifier may be added to each temperature sensor as part of the assembly process. Alternatively, the temperature sensors may be received from a supplier in a fully assembled state already equipped with an individual identifier. It should be noted that "mass-manufacturing" shall mean herein a serial production of items at peak manufacturing rates of at least 30,000 items per year.

Irrespective of whether the temperature sensors are assembled in the same production line or received in a fully assembled state from a supplier or another production line, the subsequent steps are performed for each assembled or received temperature sensor as part of production testing in the production line. This is in contrast to mere type tests that are, e.g. for the purpose of type approval by relevant authorities, carried out only for samples of the temperature sensors under laboratory conditions to determine a nominal response time for a type of temperature sensors.

So, each of the assembled or received temperature sensors is immersed into at least one thermostatic bath having a pre-determined reference temperature. And for each of those temperature sensors, a set of measurement values is logged during immersing into at least one of the at least one thermostatic bath. Preferably, there is a row of two or more thermostatic baths having different pre-determined reference temperatures, and different sets of measurement values are logged during consecutive immersing of the respective temperature sensor into the two or more thermostatic baths. Once the one or more sets of measurement values is logged, an individual response time value is determined for each of the temperature sensors based on the one or more sets of measurement values. The individual response time value may, for example, be defined as the time that an individual temperature sensor takes to respond at a specified percentage to a step change in temperature, e.g. $T_{0.9}$, $T_{0.5}$ or $T_{0.1}$ giving the time for 90%, 50% or 10%, respectively, of the response step. For the sake of simplicity, $T_{0.5}$ giving the time needed for 50% of the response step is used in the following to describe the response time value. It will be understood by the skilled person that any other definition of the response time value is also applicable.

In case the temperature sensors comprise resistance temperature detectors (RTDs), the measurement values may be analogue or digital temperature values and/or analogue or digital resistance values that are indicative of the currently measured temperature. The temperature sensor may, for instance, comprise an RTD in form of a platinum resistance thermometer (PRT), e.g. a PT100, PT500, or PT1000 element, wherein the resistance of the PRT scales with the measured temperature. A PT500 element, for instance, has a nominal resistance of 500 Ohms at 0°C. A multimeter or volt-ohm-milliammeter (VOM) may be used to determine the measurement values by measuring the resistance of the RTD of the temperature sensor. In case of a digital temperature sensor, a serial communication may be used to read the digital measurement values.

The determined individual response time value is then logged in association with the individual identifier. For example, the individual response time value could be added to the individual identifier, e.g. by printing on the physical label tag or the cable. In case the temperature sensors are digital temperature sensors, a further option may be to store determined individual response time value as digital information in a memory of each temperature sensor. Preferably, the determined individual response time value is stored in a data base in association with the individual identifier.

Having the determined individual response time value readily available as a quality information for each temperature sensor opens several options for improving the production quality. For example, too slow temperature sensors could be sorted out. A temperature sensor may, for example, be too slow if an RTD sensor element was not properly inserted in thermo-conductive paste within a sheath during the assembly process. Alternatively, or in addition, too quick temperature sensors could be sorted out. A temperature sensor may, for example, be too quick if the wrong thermo-conductive paste was used during the assembly process. Another option for making use of the determined individual response time value is a better "pairing" of alike temperature sensors for grouping them to pairs or trios as matched equipment for a thermal energy meter. It is desirable to use a pair or trio of matched temperature sensors having a similar response time. The determined individual response time value enables a verification that a matched pair or trio of temperature sensors has the same response time within pre-determined limits. Another advantage of knowing the individual response time value for each produced temperature sensor is that it could be used as an individual input parameter for the configuration and/or calibration of a calculator of a thermal energy meter to improve a dynamic temperature measurement.

Optionally, logging the set of measurement values may comprise sampling $n \geq 5$ sample measurements of each temperature sensor at a sampling rate $1/\Delta t$, wherein $1\text{ms} \leq \Delta t \leq 3\text{s}$. The logging may be performed dynamically during the immersing step. Preferably, logging of the first measurement values of a set starts before the temperature sensor is immersed and logging of the last measurement values of a set ends before the temperature sensor is pulled out of the thermostatic bath. It should be noted that the logging may start at any time, even when the temperature sensor is already partly or fully immersed. In principle, the response time value can be determined for any temperature step. However, as the temperature step along the set of measurement values may be smaller if the logging starts when the temperature sensor is already partly or fully immersed, there may be larger error on the determined individual response time value. Thus, the logging of a set of measurement values starts preferably with the temperature sensor being exposed to ambient air temperature before it is immersed into a thermostatic bath. The set of measurement values may then comprise 20 or more sample measurements logged every 0.5 seconds, i.e. over a total sampling time of at least 10 seconds, preferably at least 50 seconds or more than two minutes. The temperature sensor is immersed into a thermostatic bath during these 10, 50 or more seconds.

Optionally, the sampling rate $1/\Delta t$ may be varied, preferably decreased, continuously or at least once stepwise between the n sample measurements. For example, when the measurement values settle at or asymptotically approach a final value indicative of the reference temperature of the thermostatic bath, the sampling rate $1/\Delta t$ may be decreased to logging sample measurements every 2 or 3 seconds. In most cases, a nominal or expected response time is known for the currently mass-manufactured type of temperature sensors. For example, the sampling rate $1/\Delta t$ may be decreased after a certain multiple of nominal or expected response time. If the nominal or expected response time is 3 seconds, the sampling rate $1/\Delta t$ may be decreased after 15 seconds, i.e. after five times the nominal or expected response time.

Optionally, determining the individual response time value comprises fitting one or more parameters of a model curve to the set of measurement values over time, wherein the individual response time value is deduced from the one or more fitted parameters. This is particularly beneficial, because the starting temperature at the start of the logging of the first sample measurements is in principle not known. The reason for this is that the production line may not always run at a constant speed and at constant ambient temperature. There may be stops or variations in the ambient temperature. Using fitted parameters of a model curve makes the determination of the individual response time value independent of knowing or determining the starting temperature. A further advantage is that there is no need to wait for the temperature sensors to adapt to the ambient temperature between thermostatic baths of different reference temperature. The process can thus be performed quicker if more than one thermostatic bath is used.

Optionally, the model curve may be an exponential function or a sum of exponential functions. For example, the model curve may be parametrised by:

$$F_1(t) = A \cdot \left( 1 - A_1 e^{\frac{-(t-t_0)}{\tau_1}} \right) + B \quad \text{or} \quad F_2(t) = A \cdot \left( 1 - A_1 e^{\frac{-(t-t_0)}{\tau_1}} - A_2 e^{\frac{-(t-t_0)}{\tau_2}} \right) + B,$$

wherein $A, A_1, \tau_1, t_0, B$ or $A, A_1, A_2, \tau_1, \tau_2, t_0, B$ are fitting parameters to fit the model curve to the sample measurements of a set of measurement values with the least error. The model curves approach the value A+B for large values of t, i.e. $F_1(t \to \infty) = F_2(t \to \infty) = A + B$. The individual response time value $T_{0.5}$ be directly determined from the fitting parameters. For example, it can be determined as follows: $T_{0.5} = \tau_1, \cdot \ln(2)$ for the fitting with $F_1(t)$ or $T_{0.5} \approx \frac{\ln(2)}{A_1 + A_2}(A_1 \tau_1 + A_2 \tau_2)$ for the fitting with $F_2(t)$. In case there is more than one set of measurement values available from more than one thermostatic bath, the determined individual response time values may be averaged in a weighted or unweighted fashion.

Optionally, one or more measurement values of the set of measurement values may be discarded before determining the individual response time value. Preferably, the one or more measurement values may be discarded before fitting the model curve. In particular, it has shown that the first one or two sample measurements of a set of measurements are less suitable to the fitted. As the determination of the individual response time value by model curve fitting is independent of the starting temperature, it is thus preferable to always discard the first one or two sample measurements of a set of measurements before fitting the model curve. It has shown to be advantageous to discard all first sample measurements up to (and preferably including) the first significantly changed sample measurement value. This reduces the risk of using sample measurements before the temperature sensor is fully immersed. To be on the safe side in this respect, even the sample measurement value following the first significantly changed sample measurement value may be discarded.

Optionally, logging the determined individual response time value associated with the individual identifier may comprise storing the determined individual response time value associated with the individual identifier in a data base. This allows a versatile use of the information about the individual response time value, e.g. for sorting out low quality temperature sensors or pairing alike temperature sensors.

Optionally, the assembled temperature sensors may be immersed into the at least one thermostatic bath in groups of $m \geq 2$ temperature sensors at a time. Preferably, the assembled temperature sensors may be immersed into the at least one thermostatic bath in groups of 8, 16 or more temperature sensors at a time. This significantly speeds up the production process. The production line may provide transport carriers having 8, 16 or more mounting points, wherein each mounting point is unambiguously identified and associated with unambiguously identified connectors. Each temperature sensor of a group is mechanically connected to one of the mounting points of a transport carrier, and electrically connected to the associated connectors. For example, temperature sensor No. 17564 may be at mounting point #12 and connected to associated connector #12. The connectors are preferably unambiguously identified input ports of a multimeter system that may receive and log the sensor signals of the group of 8, 16 or more temperature sensors in parallel. In case of digital temperature sensors, no multimeter system is needed, but a serial communication may be used to directly read the digital measurement values.

Optionally, the assembled temperature sensors may be immersed into at least two thermostatic baths having different pre-determined reference temperatures, wherein determining an individual response time value of a temperature sensor includes a weighted or unweighted averaging of a first individual response time and a second individual response time, wherein the first individual response time is determined on the basis of a first set of measurement values being logged when the temperature sensor is immersed into a first one of the thermostatic baths, and wherein the second individual response time is determined on the basis of a second set of measurement values being logged when the temperature sensor is immersed into a second one of the thermostatic baths. For example, the first thermostatic bath may be colder than ambient air temperature and the second thermostatic bath may be hotter than ambient air temperature. The reference temperature of the first thermostatic bath may, for example, be 10°C, whereas the reference temperature of the second thermostatic bath may, for example, be 75°C. The medium of the thermostatic baths may be water. A third thermostatic bath with a glycerine medium may be used to provide a reference temperature above 100°C, e.g. 140°C. One thermostatic bath is in principle sufficient to determine the individual response time. However, the production line may be equipped anyway with more than one thermostatic bath in order to test the signal response of the temperature sensors at different temperatures. For example, it may be tested at different reference temperatures whether the sensor signal is stable or whether it fluctuates around a value indicative of the reference temperature of the current thermostatic bath. If more than one thermostatic bath is available anyway, it is thus beneficial to determine the individual response time for two or more of the thermostatic baths to reduce the error.

Optionally, assembling the temperature sensors may comprise connecting a cable to a temperature sensing element and inserting the temperature sensing element into a thermally conductive sheath, wherein the temperature sensing element is submerged in a thermally conductive material within the sheath. Preferably, the temperature sensors may be so-called "direct" or "pocket" temperature sensors. Direct temperature sensors are in direct contact with the heating/cooling medium of which the temperature is to be measured. Pocket temperature sensors are not directly in contact with the heating/cooling medium of which the temperature is to be measured. They are inserted in a thermo-conductive pocket that reaches into the medium. This has the advantage that the temperature sensor can be exchanged without opening the piping for the heating/cooling medium.

Optionally, logging the set of measurement values may comprise sampling measurement values until the measurement values stabilise at or around a value indicative of the reference temperature of the current thermostatic bath. "Stabilised" or "stable" measurement values in the context of this invention shall mean that a thermal equilibrium was reached in which any fluctuations in the measurement values are marginal and due to measurement uncertainties rather than temperature changes. In most cases, an expected or nominal response time may be known and it can be expected that the measurement values will be stable after a multiple, e.g. four or five, of the expected or nominal response time. However, the mass-manufacturing process can be expedited if the sampling time or number of samplings is not fixed, but variable so that the sampling is only run for as long as necessary and stopped as soon as possible, i.e. when the measurement values have stabilised.

Optionally, the method of mass-manufacturing may further comprise verifying a quality test for each of the temperature sensors if the measurement values stabilise around a value indicative of the pre-determined reference temperature of the current thermostatic bath. This may be criterium to sort out low-quality temperature sensors of which the measurement values fluctuate too much. Alternatively, or in addition, it may be, inter alia, a criterium for pairing the temperature sensors to matched pairs or trios.

Optionally, the method may further comprise failing a quality test if the individual response time value of each of the temperature sensors is above a pre-determined maximum response time, for example 2.5 seconds, and/or may further comprise failing a quality test if the individual response time value of each of the temperature sensors is below a pre-determined minimum response time, for example 0.5 seconds. This may be criterium to sort out low-quality temperature sensors of which the individual response time is out of the acceptable range. Alternatively, or in addition, it may be, inter alia, a criterium for pairing the temperature sensors to matched pairs or trios.

Optionally, the method may further comprise sorting said temperature sensors into matched pairs of two temperature sensors or matched trios of three temperature sensors, wherein the measurement values of the two temperature sensors of a matched pair or of the three temperature sensors of a matched trio have stabilised, and/or wherein the individual response time values of the two temperature sensors of a matched pair or of the three temperature sensors of a matched trio are within pre-determined limits around the same response time value.

According to another aspect of the present disclosure, a matched pair of two temperature sensors or a matched trio of three temperature sensors is provided, wherein the two temperature sensors of the matched pair or the three temperature sensors of the matched trio are verified to provide stable measurement values statically at thermal equilibrium, and verified to have an individually determined response time value within a pre-determined range of response time values dynamically towards thermal equilibrium. Said matched pair of two temperature sensors or said matched trio of three temperature sensors is preferably a product of the method of mass-manufacturing described above.

According to another aspect of the present disclosure, a thermal energy meter is provided comprising

- a flow meter,
- a calculator, and
- a matched pair of two temperature sensors or a matched trio of three temperature sensors,

wherein the two temperature sensors of each matched pair or the three temperature sensors of the matched trio are verified to provide stable measurement values statically at thermal equilibrium, and verified to have an individually determined response time value within a pre-determined range of response time values dynamically towards thermal equilibrium. Said matched pair of two temperature sensors or said matched trio of three temperature sensors is preferably a product of the method of mass-manufacturing described above.

According to another aspect of the present disclosure, a use of a matched pair of two temperature sensors or a matched trio of three temperature sensors for a thermal energy meter is provided, wherein the two temperature sensors of the matched pair or the three temperature sensors of the matched trio are verified to provide stable measurement values, and verified to have an individually determined response time value within a pre-determined range of response time values. Said used matched pair of two temperature sensors or said used matched trio of three temperature sensors is preferably a product of the method of mass-manufacturing described above.

SUMMARY OF THE DRAWINGS

Embodiments of the present disclosure will now be described by way of example with reference to the following figures of which:

Fig. 1a shows an example of an embodiment of a thermal energy meter in a symmetric setup with a pair of matched temperature sensors to be mass-manufactured according to the present disclosure;

Fig. 1b shows an example of an embodiment of a thermal energy meter in an asymmetric setup with a pair of matched temperature sensors to be mass-manufactured according to the present disclosure;

Fig. 2a shows an example of an embodiment of a pocket temperature sensor being installed at a heating/cooling pipe according to the present disclosure;

Fig. 2b shows how the temperature sensor of Fig. 2a is inserted into its pocket;

Fig. 2c shows a more schematic view of a temperature sensor to be mass-manufactured according to the present disclosure;

Fig. 3 shows a top view of a production line for mass-manufacturing temperature sensors according to the present disclosure;

Fig. 4 shows a schematic view of a part of the production line shown in Fig. 3; and

Fig. 5a,b show two diagrams of logged and fitted sample measurement values for two thermostatic baths at different reference temperatures.

DETAILED DESCRIPTION

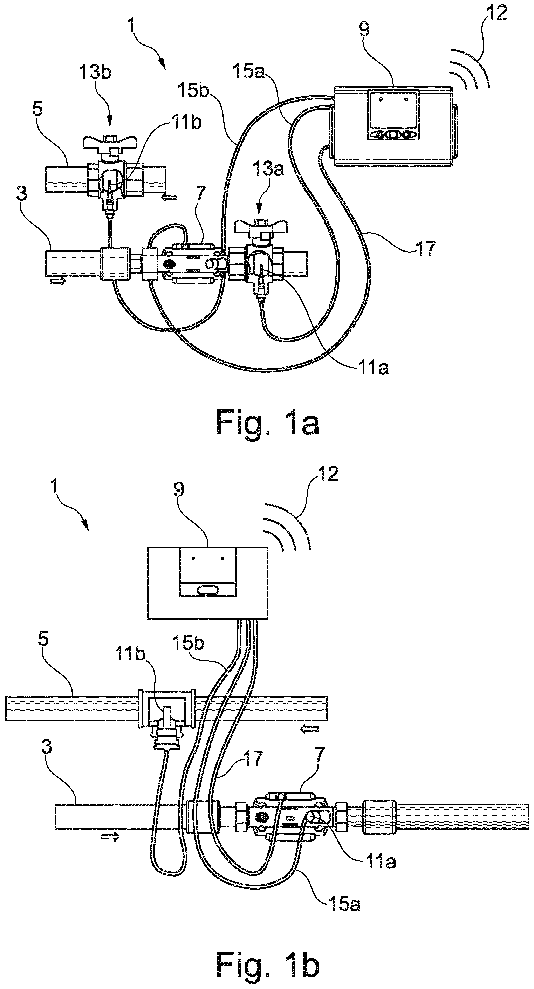

Figs. 1a,b show examples of a thermal energy meter 1 being installed at a thermal energy piping system. The thermal energy piping system may be used as a cooling system or a heating system providing thermal energy to a thermal energy consumer (not shown). The thermal energy piping system comprises an inlet pipe 3 and an outlet pipe 5, wherein a thermal medium fluid, e.g. heated or cooled water, flows through the inlet pipe 3 from a thermal energy source (not shown) towards a thermal energy consumer (not shown), and wherein the thermal medium fluid flows through the outlet pipe 5 from the thermal energy consumer back to the thermal energy source. The thermal energy meter 1 comprises a flow sensor 7, a calculator 9, and a pair of two temperature sensors 11a,b. One of the temperature sensors 11a,b is installed at the inlet pipe 3 while the other one of the temperature sensors 11b,a is installed at the outlet pipe 5. The thermal energy meter 1 is battery-powered and equipped with a signal transmitter for sending thermal energy consumption data via a wireless connection 12 to a head-end system (not shown) of a utility provider for billing purposes.

The flow sensor 7 is here installed at the inlet pipe 3. Alternatively, it could be installed at the outlet pipe 5, because the flow is the same in the inlet pipe 3 and the outlet pipe 5. The thermal energy meter 1 of Fig. 1a has a symmetric setup, in which each of the temperature sensors 11a,b are identical direct temperature sensors being arranged at identical ball valves 13a,b. Preferably, the temperature sensors 11a,b have a respective cable 15a,b of the same length for connecting with the calculator 9. The flow sensor 7 is connected to the calculator 9 by another cable 17 for providing flow measurement values. The thermal energy meter 1 of Fig. 1b has an asymmetric setup with pocket temperature sensors 11a,b, wherein one of the temperature sensors 11b is arranged in a pocket at the outlet pipe 5, whereas the other one 11a of the temperature sensors 11a,b is integrated into the flow sensor 7.

Irrespective of whether the thermal energy meter 1 has a symmetric or asymmetric setup or whether direct or pocket temperature sensors are used, the two temperature sensors 11a,b of the thermal energy meter 1 must provide measurement signals for the calculator 9 to determine a difference $\Delta T = T_f - T_r$ between the fluid temperature $T_f$ in the inlet pipe 3 and the fluid temperature $T_r$ in the outlet pipe 5. The calculator 9 may apply the formula

$$Q = \int_{t=0}^{t=\tau} A \cdot v \cdot \rho \cdot c_w \cdot \left(T_f - T_r\right) dt$$

for determining the thermal energy Q consumed over the time period $\tau$, wherein A is the pipe cross section at the flow sensor 7 where the fluid velocity v is measured, $\rho$ is the fluid density, and $c_w$ is the specific heat capacity of the fluid. The fluid flow can be denoted by $V = A \cdot v$. The consumed energy Q may be a positive value for supplying heating energy and a negative value for supplying cooling energy.

Thus, a correct measurement of the temperature difference $\Delta T$ is a precondition for a correct determination of the consumed thermal energy. As a utility provider bills customers on the basis of the determined consumed thermal energy, there are high regulatory standards to be fulfil by the temperature sensors 11a,b in order to get the thermal energy meter 1 certified for use.

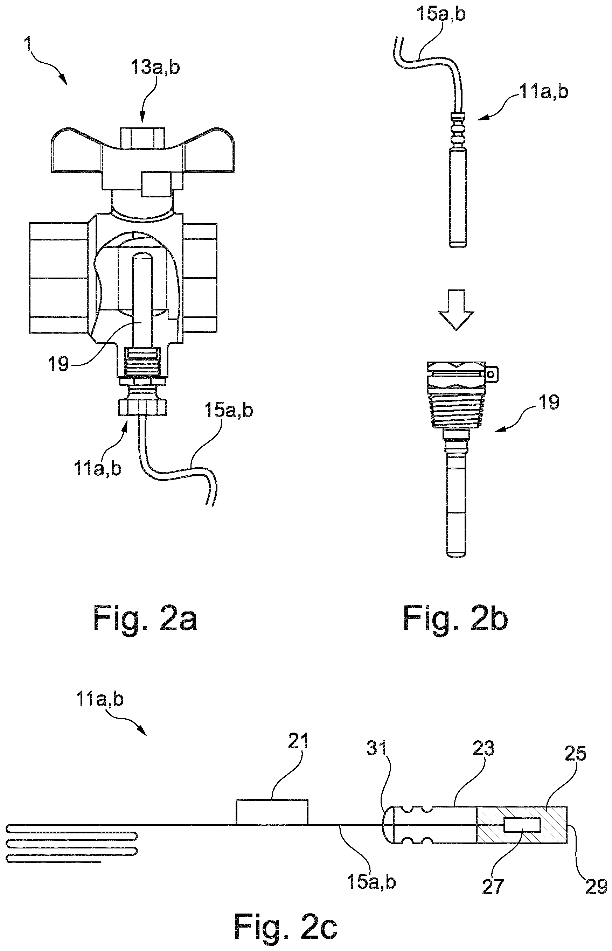

Fig. 2a shows one of the direct temperature sensors 11a,b of Fig. 1a in more detail. Fig. 2b shows how the pocket temperature sensors 11a,b of Fig. 1b is inserted into a pocket 19. So, the pocket 19 reaches into the respective inlet/outlet pipe 3, 5 and the temperature sensor 11a,b is inserted into the pocket 19. The pocket temperature sensor 11a,b of Figs. 1b, 2b can thereby be replaced without opening the pipes 3, 5. Fig 2c shows a temperature sensor 11a,b, which may be a direct or pocket temperature sensor, more schematically. The temperature sensor 11a,b comprises a cable 15, an individual identifier 21, a metal sheath 23 filled at least partly with thermally conductive material 25 (e.g. thermo-conductive paste or gel), and a temperature sensing element 27 (e.g. an RTD in form of a platinum resistance thermometer (PRT)) preferably fully submerged in the thermally conductive material 25 within the sheath 23. The metal sheath 23 may have a slim can-shape with a closed distal end 29 and a proximal end 31 that is sealed around the cable 15. The individual identifier 21 of the temperature sensor 11a,b is here shown as a flag or label tag. The temperature sensor 11a,b could be a bar code or serial number printed on the label tag or on the cable 15a,b or on the sheath 23. Alternatively, or in addition, the individual identifier 21 could be an RFID tag. In case of a digital temperature sensor 11a,b, the temperature sensing element 27 may provide digital data as individual identifier 21.

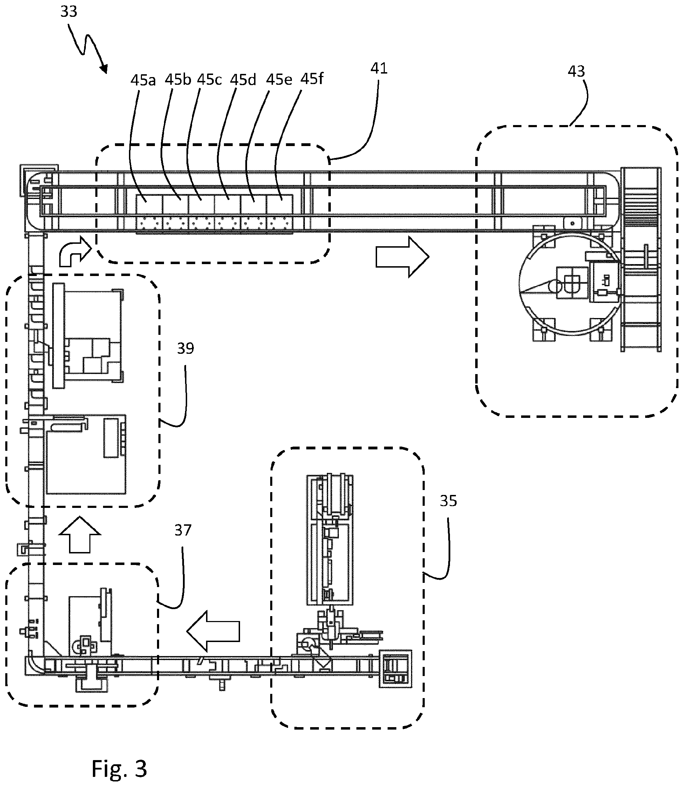

Fig. 3 shows a schematic top view of an embodiment of a fully automatic production line 33 for mass-manufacturing the temperature sensors 11a,b to be used for thermal energy meters 1 as described above. The shown production line 33 comprises different production zones 35, 37, 39, 41, 43. The first production zone 35 of the production line 33 is a cable-cutting zone 35, where the cable 15a,b is cut to a desired cable length. The second production zone 37 of the production line 33 is a connecting zone 37, where the cable 15a,b is connected to the temperature sensing element 27. It follows a sealing zone 39, where the temperature sensing element 27 is submerged into the thermally conductive material 25 within the metal sheath 23 and where the proximal end 31 of the metal sheath 23 is sealed around the cable 15a,b. After the sealing zone 39, there is a measuring zone 41, where measurement values of the temperature sensors 11a,b are logged when they are immersed in thermostatic baths 45a-f. A final production zone 43 of the production line 33 is a pairing zone 43, where the temperature sensors 11a,b are sorted and grouped to matched pairs or trios of temperature sensors 11a,b to be used for thermal energy meters 1. The present disclosure is mainly directed to those method steps for mass-manufacturing the temperature sensors 11a,b that are performed at the measuring zone 41. However, it should be noted that the measuring zone 41 is part of the production line 33 and not part of an external laboratory for type testing production samples. So, each temperature sensor 11a,b, assembled in the production line 33 passes the measuring zone 41. It should be further noted that the first three production zones 35, 37, 39 may be outsourced to an external supplier delivering fully assembled temperature sensors 11a,b. The fully assembled temperature sensors 11a,b would then be received by the production line 33 that would only comprise the measuring zone 41 und the pairing zone 43.

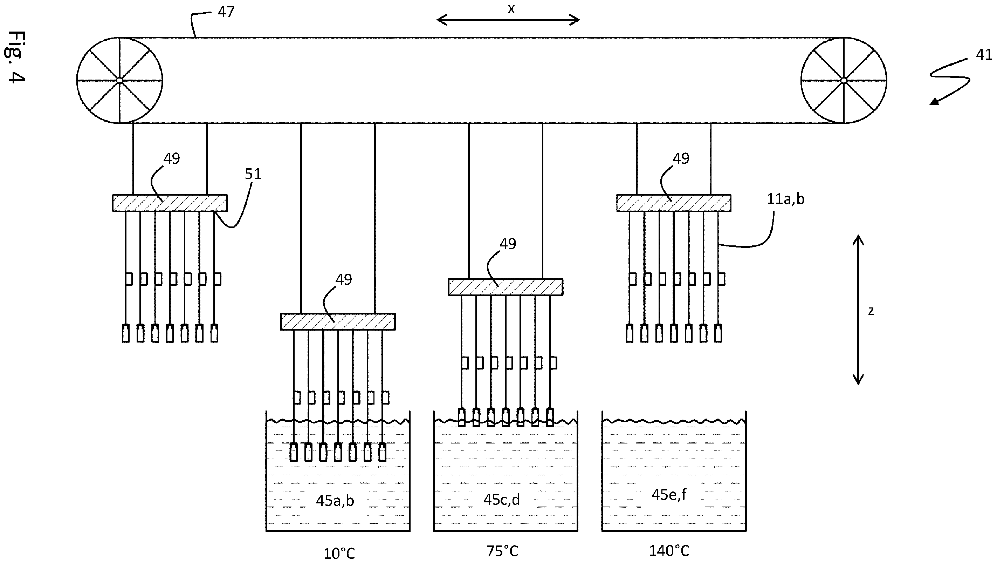

Fig. 4 shows schematically the measuring zone 41 of the production line 33 of Fig. 3 in more detail. The measuring zone 41 comprises a transportation system 47 and thermostatic baths 45a-f with three different pre-determined reference temperatures 10°C, 75°C, and 140°C. As shown in Fig. 3, the measuring zone 41 may comprise six or more thermostatic baths 45a-f. For example, the first two baths 45a,b, may have a pre-determined reference temperature of 10°C, the next two baths 45c,d may have a pre-determined reference temperature of 75°C, and the last two baths 45e,f may have a pre-determined reference temperature of 140°C. Please note that the medium of the first four baths 45a-d may be water, whereas the medium of the last two baths 45e,f may be glycerine. Having two or more baths available for each reference temperature has the advantage of a higher throughput, because more temperature sensors 11a,b can be tested in parallel.

The transportation system 47 may comprise one or more identifiable transport carriers 49. Each transport carrier 49 comprises a fixed number of unambiguously identifiable mounting points 51. In the example shown in Fig. 4, each transport carrier 49 comprises seven mounting points 51. It should be noted that any number, e.g. 8 or 16, of mounting points 51 per transport carrier 49 is in principle possible. The higher the number is, the higher the throughput can be due to more parallel testing. Each of the mounting points 51 is unambiguously associated with an unambiguously identified connector (not shown). The fully assembled temperature sensors 11a,b are mounted to the transport carriers 49 in groups of seven, each at a respective mounting point 51 and being signal-connected to a respective connector. The connectors are in signal-connection with a logging system (not shown) that is able to receive sensor signals from each identified connector. The logging system is further able to read the individual identifier 21 of each temperature sensor 11a,b, so that it knows which temperature sensor 11a,b is mounted on which mounting point 51 on which transport carrier 49. Thereby, the logging system is able to log measurement values and/or determined values and to associate them with an individual temperature sensor 11a,b.

The transportation system 47 is configured to move the transport carriers 49 in horizontal direction x and to lower the transport carriers 49 in vertical direction z. Thereby, the transport carriers 49 can be positioned above a desired thermostatic bath 45a-f and lowered, so that the temperature sensors 11a,b are immersed into the respective thermostatic bath 45a-f. The groups of seven temperature sensors 11a,b at each transport carrier 49 is immersed subsequently into thermostatic baths 45a-f of different pre-determined reference temperature. During immersing into at least one of the thermostatic baths 45a-f, the logging system logs a set of measurement values of each temperature sensor 11a,b of the immersed group. The logging may even start before the temperature sensors 11a,b touch the thermostatic medium in the respective thermostatic baths 45a-f.

For example, $n \geq 30$ sample measurements of each temperature sensor 11a,b, may be logged at a sampling rate $1/\Delta t$, wherein $1ms \leq \Delta t \leq 3s$. It is important to understand that the temperature around the temperature sensors 11a,b is in principle unknown at the starting point of the logging or sampling. This is, because the ambient temperature varies and it is unknown for how long a temperature sensor 11a,b was exposed to what ambient temperature when the logging or sampling starts. As the production line 33 may run with varying speed and unpredictable interruptions, it is much more difficult to provide reproducible starting conditions for the sampling than under laboratory conditions for type testing. As a solution to this problem, it is beneficial to fit one or more parameters of a model curve to the set of measurement values over time.

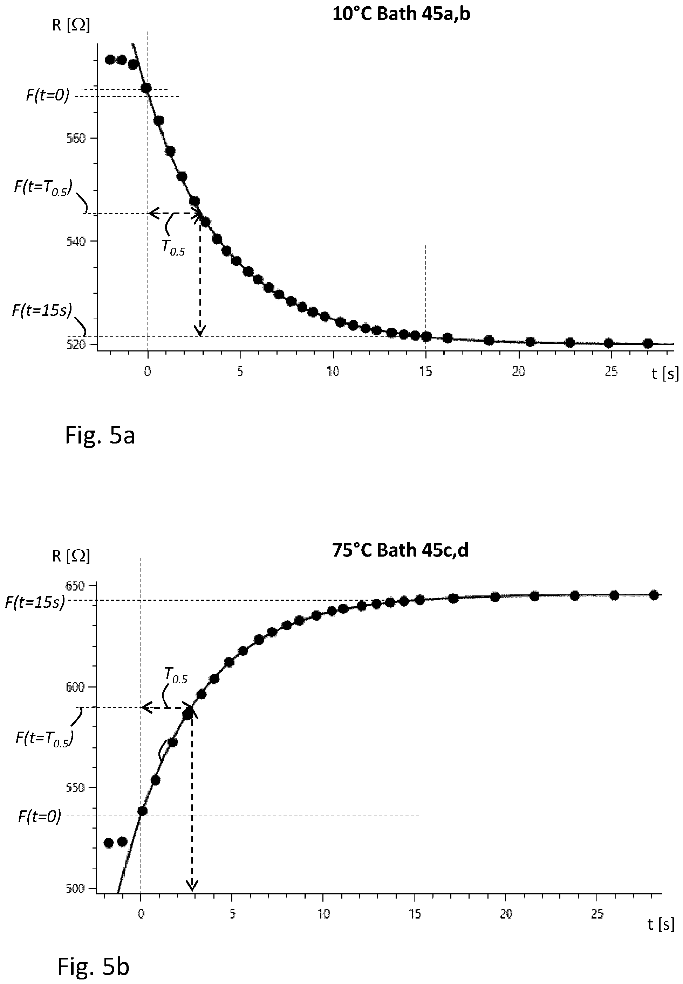

Independent of the unknown starting conditions, the individual response time value is then deducible from the one or more fitted parameters. Figs. 5a,b show fitted sets of measurements values as an example. The temperature sensing element 27 is in this example a PT500 element, i.e. a platinum resistance thermometer (PRT) having a nominal resistance of 500 Ohms at 0°C. The measurement values are the resistance R of the temperature sensor 11a,b in Ohms logged over time t in seconds.

The ambient temperature is unknown, but may be around 40°C. The first measured values in Fig. 5a are thus around 575 Ohms. The logging seems to have started before the temperature sensors 11a,b have touched the 10°C cold medium in the thermostatic bath 45a,b. The third measurement value shows the first significant decrease in resistance. It follows an expected exponential decrease towards a lower resistance value that is indicative of the 10°C temperature of the thermostatic bath 45a,b. It is beneficial to discard the first or the first two measurement values and to disregard them for the fitting of the set of measurement values. The set contains more than 30 measurement values that are sampled at a sampling rate $1/\Delta t = 2s^{-1}$ up to $t = t_0 + 15s$. For $t > t_0 + 15s$, the measurement values have settled at approx. 520 Ohms (indicative of 10°C) and the sampling rate is decreased in a step to $1/\Delta t = 0.5s^{-1}$.

The fitted model curve in Fig. 5a may be parametrised by:

$$F_2(t) = A \cdot \left(1 - A_1 e^{\frac{-(t-t_0)}{\tau_1}} - A_2 e^{\frac{-(t-t_0)}{\tau_2}}\right) + B,$$

wherein $A$, $A_1$, $A_2$, $\tau_1$, $\tau_2$, $t_0$, $B$ are fitting parameters to fit the model curve to set of sample measurement values with the least error. The model curves approach the value A+B for large values of t, i.e. $F_2(t \to \infty) = A + B$. The individual response time value $T_{0.5}$ can be directly determined from the fitting parameters. For example, it can be determined as follows: $T_{0.5} = \tau_1, \cdot \ln$ (2) under the assumption that $A_1 \gg A_2$. In the example shown in Fig. 5a, the individual response time value $T_{0.5}$ is about 2.85 seconds. The individual response time value $T_{0.5}$ is logged associated with the individual identifier 21 of the tested temperature sensor 11a,b. The logging and fitting is done in parallel for each temperature sensor 11a,b of the group of seven temperature sensors 11a,b that are mounted to the same transport carrier 49.

Fig. 5b shows the result from the subsequent sampling and fitting when the group of temperature sensors 11a,b is immersed into the next 75°C hot thermostatic bath 45c,d. As can been seen, the first two resistance values around 520 Ohms still indicate a temperature of 10°C of the previous thermostatic bath 45a,b. When immersed into the 75°C hot medium of the next thermostatic bath 45c,d, the resistance values rise exponentially for asymptotically approaching a resistance value of approx. 642 Ohms being indicative of the 75°C reference temperature. As before, the first two resistance values are discarded and disregarded for the fitting as above yielding an individual response time value $T_{0.5}$ of about 2.9 seconds. The two determined individual response time values for the same temperature sensor 11a,b may be averaged to give a final individual response time value $T_{0.5}$ of about 2.875 seconds. The averaging may be unweighted or weighted, e.g. by taking a fitting error as weight into account. It is possible, but not necessary to determine a third individual response time value in the 140°C hot thermostatic bath 45e,f. It should be noted that the glycerine medium of the 140°C hot thermostatic bath 45e,f affects the determined response time compared to the water medium of the previous thermostatic baths 45a-d.

Getting back to the production line 33 shown in Fig. 3, the individual response time value $T_{0.5}$ is stored in a database for each the temperature sensor 11a,b that leaves the measuring zone 41 and enters the pairing zone 43. In the pairing zone 43, the temperature sensors 11a,b with a too low or too high individual response time value $T_{0.5}$ may be sorted out for lack of quality. Furthermore, they may be sorted and grouped into matched pairs or trios of temperature sensors 11a,b having approximately the same individual response time value within limits. In addition, they may be sorted and grouped into matched pairs or trios of temperature sensors 11a,b providing stable values. The matched pairs or trios may be used as verified matching equipment or parts of a thermal energy meter 1 as shown in Figs.1a,b.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments.

List of reference numerals:

| 1 | thermal energy meter |
|---|---|
| 3 | inlet pipe |
| 5 | outlet pipe |
| 7 | flow sensor |
| 9 | calculator |
| 11a,b | temperature sensor(s) |
| 12 | wireless communication |
| 13a,b | ball valve(s) |
| 15a,b | cable(s) |
| 17 | cable |
| 19 | pocket |
| 21 | individual identifier |
| 23 | sheath |
| 25 | thermally conductive material |

| 27 | temperature sensing element |
| 29 | distal end of sheath |
| 31 | proximal end of sheath |
| 33 | production line |
| 35 | cable-cutting zone |
| 37 | connecting zone |
| 39 | sealing zone |
| 41 | measuring zone |
| 43 | pairing zone |
| 45a-f | thermostatic bath(s) |
| 47 | transportation system |
| 49 | transport carrier |
| 51 | mounting point |

**Claims**

1. A method of mass-manufacturing temperature sensors (11a,b), the method comprising:

   - assembling or receiving said temperature sensors (11a,b), wherein an individual identifier (21) is associated with each of the temperature sensors (11a,b);
   - immersing said temperature sensors (11a,b) into at least one thermostatic bath (45a-f) having a pre-determined reference temperature;
   - logging a set of measurement values of each temperature sensor (11a,b) during immersing into at least one of the at least one thermostatic bath (45a-f);
   - determining an individual response time value ($T_{0.5}$) based on the set of measurement values for each of the temperature sensors (11a,b); and
   - logging the determined individual response time value ($T_{0.5}$) associated with the individual identifier (21).

2. The method according to claim 1, wherein logging the set of measurement values comprises sampling $n \geq 5$ sample measurements of each temperature sensor (11a,b) at a sampling rate $1/\Delta t$, wherein $1ms \leq \Delta t \leq 3s$.

3. The method according to claim 2, wherein the sampling rate $1/\Delta t$ is varied, preferably decreased, continuously or at least once stepwise between the n sample measurements.

4. The method according any one of the preceding claims, wherein determining the individual response time value ($T_{0.5}$) comprises fitting one or more parameters of a model curve to the set of measurement values over time, wherein the individual response time value ($T_{0.5}$) is deduced from the one or more fitted parameters.

5. The method according to claim 4, wherein the model curve is a an exponential function or a sum of exponential functions.

6. The method according to any one of the preceding claims, wherein logging the determined individual response time value ($T_{0.5}$) associated with the individual identifier (21) comprises storing the determined individual response time value ($T_{0.5}$) associated with the individual identifier (21) in a data base.

7. The method according to any one of the preceding claims, wherein the temperature sensors (11a,b) are immersed into the at least one thermostatic bath (45a-f) in groups of $m \geq 2$ temperature sensors (11a,b) at a time.

8. The method according to any one of the preceding claims, wherein the temperature sensors (11a,b) are immersed into at least two thermostatic baths (45a-f) having different pre-determined reference temperatures, wherein determining the individual response time value ($T_{0.5}$) of a temperature sensor (11a,b) includes a weighted or unweighted averaging of a first individual response time and a second individual response time, wherein the first individual response time is determined on the basis of a first set of measurement values being logged when said temperature sensor (11a,b) is immersed into a first one of the thermostatic baths (45a-f), and wherein the second individual response time is determined on the basis of a second set of measurement values being logged when said temperature sensor (11a,b) is immersed into a second one of the thermostatic baths (45a-f).

9. The method according to any one of the preceding claims, wherein assembling said temperature sensors (11a,b) comprises connecting a cable (15a,b) to a temperature sensing element (27) and inserting the temperature sensing element (27) into a thermally conductive sheath (23), wherein the temperature sensing element (27) is submerged in a thermally conductive material (25) within the sheath (23).

10. The method according to any one of the preceding claims, wherein one or more measurement values of the set of measurement values are discarded before determining the individual response time value ($T_{0.5}$).

11. The method according to any one of the preceding claims, wherein logging the set of measurement values comprises sampling measurement values until the measurement values stabilise at or around a value indicative of the reference temperature of the current thermostatic bath (45a-f).

12. The method according to any one of the preceding claims, further comprising verifying a quality test if the measurement values stabilise around a value indicative of the pre-determined reference temperature of the current thermostatic bath (45a-f).

13. The method according to any one of the preceding claims, further comprising failing a quality test if the individual response time value ($T_{0.5}$) of each of the temperature sensors (11a,b) is above a pre-determined maximum response time, for example 2.5 seconds, and/or further comprising failing a quality test if the individual response time value of each of the temperature sensors is below a pre-determined minimum response time, for example 0.5 seconds.

14. The method according to any one of the preceding claims, further comprising sorting said temperature sensors (11a,b) into matched pairs of two temperature sensors or matched trios of three temperature sensors (11a,b), wherein the measurement values of the two temperature sensors (11a,b) of a matched pair or of the three temperature sensors (11a,b) of a matched trio have stabilised, and/or wherein the individual response time values ($T_{0.5}$) of the two temperature sensors (11a,b) of a matched pair or of the three temperature sensors (11a,b) of a matched trio is within pre-determined limits around the same response time value.

15. A matched pair of two temperature sensors (11a,b) or matched trio of three temperature sensors (11a,b), as sorted according to claim 14, wherein the two temperature sensors (11a,b) of the matched pair or the three temperature sensors (11a,b) of the matched trio are verified to provide stable measurement values, and verified to have an individually determined response time value ($T_{0.5}$) within a pre-determined range of response time values.

16. A thermal energy meter (1) comprising

    - a flow meter (7),
    - a calculator (9), and
    - a matched pair of two temperature sensors (11a,b) or a matched trio of three temperature sensors (11a,b), according to claim 15,

wherein the two temperature sensors (11a,b) of each matched pair or the three temperature sensors (11a,b) of the matched trio are verified to provide stable measurement values, and verified to have an individually determined response time value ($T_{0.5}$) within a pre-determined range of response time values.

17. Use of a matched pair of two temperature sensors (11a,b) or a matched trio of three temperature sensors (11a,b), according to claim 15, for a thermal energy meter (1), wherein the two temperature sensors (11a,b) of the matched pair or the three temperature sensors (11a,b) of the matched trio are verified to provide stable measurement values, and verified to have an individually determined response time value ($T_{0.5}$) within a pre-determined range of response time values.

**Patentansprüche**

1. 1. Verfahren zur Massenfertigung von Temperatursensoren (11a, b), wobei das Verfahren

    - ein Zusammensetzen oder Erhalten der Temperatursensoren (11a, b), wobei jedem der Temperatursensoren (11a, b) eine individuelle Kennung (21) zugeordnet ist;
    - ein Eintauchen der Temperatursensoren (11a, b) in wenigstens ein thermostatisches Bad (45a bis f) mit einer vorherbestimmten Referenztemperatur;

- ein Protokollieren eines Satzes von Messwerten eines jeden Temperatursensors (11a, b) während des Eintauchens in wenigstens eines des wenigstens einen thermostatischen Bads (45a bis f);
- ein Bestimmen eines individuellen Ansprechzeitwerts ($T_{0,5}$) auf der Basis des Satzes von Messwerten für einen jeden der Temperatursensoren (11a, b); und
- ein Protokollieren des bestimmten individuellen Ansprechzeitwerts ($T_{0,5}$) in Verbindung mit der individuellen Kennung (21) umfasst.

2. Verfahren nach Anspruch 1, wobei das Protokollieren des Satzes von Messwerten ein Abtasten von n ≥ 5 Probemessungen eines jeden Temperatursensors (11a, b) mit einer Abtastrate von 1/Δt umfasst, wobei 1 ms ≤ Δt ≤ 3 s gilt.

3. Verfahren nach Anspruch 2, wobei die Abtastrate 1/Δt zwischen den n Probemessungen fortlaufend oder wenigstens einmal schrittweise verändert, vorzugsweise verringert, wird.

4. Verfahren nach einem der vorhergehenden Ansprüche, wobei das Bestimmen des individuellen Ansprechzeitwerts ($T_{0,5}$) ein Anpassen eines oder mehrerer Parameter einer Modellkurve an den Satz von Messwerten im Lauf der Zeit umfasst, wobei der individuelle Ansprechzeitwert ($T_{0,5}$) von dem einen oder den mehreren angepassten Parametern abgeleitet wird.

5. Verfahren nach Anspruch 4, wobei die Modellkurve eine Exponentialfunktion oder eine Summe von Exponentialfunktionen ist.

6. Verfahren nach einem der vorhergehenden Ansprüche, wobei das Protokollieren des bestimmten individuellen Ansprechzeitwerts ($T_{0,5}$), der mit der individuellen Kennung (21) verbunden ist, ein Speichern des bestimmten individuellen Ansprechzeitwerts ($T_{0,5}$), der mit der individuellen Kennung (21) verbunden ist, in einer Datenbank umfasst.

7. Verfahren nach einem der vorhergehenden Ansprüche, wobei die Temperatursensoren (11a, b) jeweils in Gruppen von m ≥ 2 Temperatursensoren (11a, b) in das wenigstens eine thermostatische Bad (45a bis f) eingetaucht werden.

8. Verfahren nach einem der vorhergehenden Ansprüche, wobei die Temperatursensoren (11a, b) in wenigstens zwei thermostatische Bäder (45a bis f) mit unterschiedlichen vorherbestimmten Referenztemperaturen eingetaucht werden, wobei das Bestimmen des individuellen Ansprechzeitwerts ($T_{0,5}$) eines Temperatursensors (11a, b) ein gewichtetes oder ungewichtetes Mitteln einer ersten individuellen Ansprechzeit und einer zweiten individuellen Ansprechzeit umfasst, wobei die erste individuelle Ansprechzeit auf der Basis eines ersten Satzes von Messwerten, die protokolliert werden, wenn der Temperatursensor (11a, b) in ein erstes der thermostatischen Bäder (45a bis f) eingetaucht wird, bestimmt wird, und wobei die zweite individuelle Ansprechzeit auf der Basis eines zweiten Satzes von Messwerten, die protokolliert werden, wenn der Temperatursensor (11a, b) in ein zweites der thermostatischen Bäder (45a bis f) eingetaucht wird, bestimmt wird.

9. Verfahren nach einem der vorhergehenden Ansprüche, wobei das Zusammensetzen der Temperatursensoren (11a, b) ein Anschließen eines Kabels (15a, b) an ein Temperaturfühlerelement (27) und ein Einsetzen des Temperaturfühlerelements (27) in eine wärmeleitfähige Umhüllung (23), wobei das Temperaturfühlerelement (27) in einem wärmeleitfähigen Material (25) in der Umhüllung (23) versenkt wird, umfasst.

10. Verfahren nach einem der vorhergehenden Ansprüche, wobei einer oder mehrere Messwerte des Satzes von Messwerten verworfen werden, bevor der individuelle Ansprechzeitwert ($T_{0,5}$) bestimmt wird.

11. Verfahren nach einem der vorhergehenden Ansprüche, wobei das Protokollieren des Satzes von Messwerten ein Abtasten von Messwerten, bis sich die Messwerte bei einem Wert, der die Referenztemperatur des aktuellen thermostatischen Bads (45a bis f) angibt, oder um diesen herum stabilisieren, umfasst.

12. Verfahren nach einem der vorhergehenden Ansprüche, ferner umfassend das Bestätigen einer Qualitätsprüfung, wenn sich die Messwerte um einen Wert, der die vorherbestimmte Referenztemperatur des aktuellen thermostatischen Bads (45a bis f) angibt, herum stabilisieren.

13. Verfahren nach einem der vorhergehenden Ansprüche ferner umfassend das Nichtbestehen einer Qualitätsprüfung, wenn der individuelle Ansprechzeitwert ($T_{0,5}$) eines jeden der Temperatursensoren (11a, b) über einer vorherbestimmten Höchstansprechzeit, zum Beispiel 2,5 Sekunden, liegt, und/oder ferner umfassend ein Nichtbestehen einer Qualitätsprüfung, wenn der individuelle Ansprechzeitwert eines jeden der Temperatursensoren unter einer vorherbestimmten Mindestansprechzeit, zum Beispiel 0,5 Sekunden, liegt.

14. Verfahren nach einem der vorhergehenden Ansprüche, ferner umfassend ein Sortieren der Temperatursensoren (11a, b) zu zusammenpassenden Paaren von zwei Temperatursensoren oder zusammenpassenden Dreiergruppen von drei Temperatursensoren (11a, b), wobei sich die Messwerte der beiden Temperatursensoren (11a, b) eines zusammenpassenden Paars oder der drei Temperatursensoren (11a, b) einer zusammenpassenden Dreiergruppe stabilisiert haben, und/oder wobei die individuellen Ansprechzeitwerte ($T_{0,5}$), der beiden Temperatursensoren (11a, b) eines zusammenpassenden Paars oder der drei Temperatursensoren (11a, b) einer zusammenpassenden Dreiergruppe innerhalb vorherbestimmter Grenzen um den gleichen Ansprechzeitwert liegen.

15. Zusammenpassendes Paar von zwei Temperatursensoren (11a, b) oder zusammenpassende Dreiergruppe von drei Temperatursensoren (11a, b), die nach Anspruch 14 sortiert wurden, wobei überprüft ist, dass die beiden Temperatursensoren (11a, b) des zusammenpassenden Paars oder die drei Temperatursensoren (11a, b) der zusammenpassenden Dreiergruppe stabile Messwerte liefern, und überprüft ist, dass sie einen individuell bestimmten Ansprechzeitwert ($T_{0,5}$) innerhalb eines vorherbestimmten Bereichs von Ansprechzeitwerten aufweisen.

16. Wärmemengenzähler (1), aufweisend

- einen Durchflussmesser (7),
- einen Rechner (9) und
- ein zusammenpassendes Paar von zwei Temperatursensoren (11a, b) oder eine zusammenpassende Dreiergruppe von drei Temperatursensoren (11a, b) nach Anspruch 15,

wobei überprüft ist, dass die beiden Temperatursensoren (11a, b) jedes zusammenpassenden Paars oder die drei Temperatursensoren (11a, b) der zusammenpassenden Dreiergruppe stabile Messwerte liefern, und überprüft ist, dass sie einen individuell bestimmten Ansprechzeitwert ($T_{0,5}$) innerhalb eines vorherbestimmten Bereichs von Ansprechzeitwerten aufweisen.

17. Verwendung eines zusammenpassenden Paars von zwei Temperatursensoren (11a, b) oder einer zusammenpassenden Dreiergruppe von drei Temperatursensoren (11a, b) nach Anspruch 15 für einen Wärmemengenzähler (1), wobei überprüft ist, dass die beiden Temperatursensoren (11a, b) des zusammenpassenden Paars oder die drei Temperatursensoren (11a, b) der zusammenpassenden Dreiergruppe stabile Messwerte liefern, und überprüft ist, dass sie einen individuell bestimmten Ansprechzeitwert ($T_{0,5}$) innerhalb eines vorherbestimmten Bereichs von Ansprechzeitwerten aufweisen.

## Revendications

1. Procédé de fabrication en série de capteurs de température (11a, b), le procédé comprenant :

- l'assemblage ou la réception desdits capteurs de température (11a, b), 5 dans lequel un identifiant individuel (21) est associé à chacun des capteurs de température (11a, b) ;
- l'immersion desdits capteurs de température (11a, b) dans au moins un bain thermostatique (45a-f) ayant une température de référence prédéterminée ;
- la journalisation d'un ensemble de valeurs de mesure de chaque capteur de température (11a, b) pendant l'immersion dans au moins un desdits au moins un bain thermostatique (45a-f) ;
- la détermination d'un temps de réponse individuel ($T_{0.5}$) sur la base de l'ensemble de valeurs de mesure pour chacun des capteurs de température (11a, b) ; et
- la journalisation de la valeur de temps de réponse individuel déterminé ($T_{0.5}$) associé à l'identifiant individuel (21).

2. Procédé selon la revendication 1, dans lequel la journalisation de l'ensemble de valeurs de mesure comprend l'échantillonnage de n ≥ mesures d'échantillons de chaque capteur de température (11a, b) à une fréquence d'échantillonnage $1/\Delta t$, dans laquelle $1ms \leq \Delta t \leq 3s$.

3. Procédé selon la revendication 2, dans lequel la fréquence d'échantillonnage $1/\Delta t$ est modifiée, de préférence diminuée, en continu ou au moins une fois par palier entre les n mesures d'échantillons.

4. Procédé selon une quelconque des revendications précédentes, dans lequel la détermination de la valeur de temps de réponse individuel ($T_{0.5}$) comprend l'ajustement d'un ou plusieurs paramètres d'une courbe modèle à l'ensemble de valeurs de mesure au cours du temps, dans lequel la valeur de temps de réponse individuel ($T_{0.5}$) est déduite du ou des paramètres ajustés.

5. Procédé selon la revendication 4, dans lequel le modèle est une fonction exponentielle ou une somme de fonctions exponentielles.

6. Procédé selon une quelconque des revendications précédentes, dans lequel la journalisation de la valeur de temps de réponse individuel ($T_{0.5}$) associée à l'identifiant individuel (21) comprend la mémorisation de la valeur de temps de réponse individuel ($T_{0.5}$) associé à l'identifiant individuel (21) dans une base de données.

7. Procédé selon une quelconque des revendications précédentes, dans lequel les capteurs de température (11a, b) sont immergés dans le ou les bains thermostatiques (45a-f) par groupes de m > 2 capteurs de température (11a, b) à la fois.

8. Procédé selon une quelconque des revendications précédentes, dans lequel les capteurs de température (11a, b) sont immergés dans au moins deux bains thermostatiques (45a-f) ayant des températures de référence prédéterminées différentes, dans lequel la détermination de la valeur de temps de réponse individuelle ($T_{0.5}$) d'un capteur de température (11a, b) comprend une moyenne pondérée ou non pondérée d'un premier temps de réponse individuel et d'un deuxième temps de réponse individuel, dans lequel le premier temps de réponse individuel est déterminé sur la base d'un premier ensemble de valeurs de mesure journalisées lorsque ledit capteur de température (11a, b) est immergé dans un premier des bains thermostatiques (45a-f) et dans lequel le deuxième temps de réponse individuel est déterminé sur la base d'un deuxième ensemble de valeurs de mesure journalisées lorsque ledit capteur de température (11a, b) est immergé dans un deuxième des bains thermostatiques (45a-f).

9. Procédé selon une quelconque des revendications précédentes, dans lequel l'assemblage desdits capteurs de température (11a, b) comprend la connexion d'un câble (15a, b) à un élément de détection de température (27) et l'insertion de l'élément de détection de température (27) dans une gaine thermoconductrice (23), dans lequel l'élément de détection de température (27) est immergé dans un matériau thermocon-ducteur (25) à l'intérieur de la gaine (23).

10. Procédé selon une quelconque des revendications précédentes, dans lequel une ou plusieurs mesures de l'ensemble de valeurs de mesure sont rejetées avant de déterminer la valeur de temps de réponse individuel ($T_{0.5}$).

11. Procédé selon une quelconque des revendications précédentes, dans lequel la journalisation de l'ensemble de valeurs de mesure comprend l'échantillonnage des valeurs de mesure jusqu'à ce que les valeurs de mesure se stabilisent à ou autour d'une valeur indiquant la température de référence du bain thermostatique actuel (45a-f).

12. Procédé selon une quelconque des revendications précédentes, comprenant en outre la vérification d'un test de qualité si la valeur de mesure se stabilise autour d'une valeur indicative de la température de référence prédéterminée du bain thermostatique actuel (45a-f).

13. Procédé selon une quelconque des revendications précédentes, comprenant en outre l'échec d'un test de qualité si la valeur de temps de réponse individuel ($T_{0.5}$) de chacun des capteurs de température (11a, b) est supérieur à un temps de réponse maximal prédéterminé, par exemple 2,5 secondes et/ou comprenant en outre l'échec d'un test de qualité si la valeur de temps de réponse individuel de chacun des capteurs de température est inférieur à un temps de réponse minimal prédéterminé, par exemple 0,5 seconde.

14. Procédé selon une quelconque des revendications précédentes, comprenant en outre le tri desdits capteurs de température (11a, b) en paires appariées de deux capteurs de température ou en trios appariés de trois capteurs de température (11a, b), dans lequel les valeurs de mesure de deux capteurs de température (11a, b) d'une paire appariée ou de trois capteurs de température (11a, b) sont stabilisées et/ou dans lequel la valeur de temps de réponse individuel ($T_{0.5}$) des deux capteurs de température (11a, b) d'une paire appariée ou des trois capteurs de température (11a,b) d'un trio apparié se situe dans des limites prédéterminées autour de la même valeur de temps de réponse.

15. Paire appariée de deux capteurs de température (11a, b) ou trio apparié de trois capteurs de température (11a, b) selon la revendication 10, dans laquelle/lequel les deux capteurs de température (11a, b) de la paire appariée ou les trois capteurs de température (11a, b) du trio apparié sont vérifiés pour fournir des valeurs de mesure stables et vérifiés pour avoir une valeur de temps de réponse déterminée individuellement ($T_{0.5}$) dans une plage prédéterminée de valeurs temps de réponse.

16. Compteur d'énergie thermique (1) comprenant

    - un débitmètre (7),
    - un calculateur (9) et
    - une paire appariée de deux capteurs de température (11a, b) ou un trio apparié de trois capteurs de température (11a, b), selon la revendication 15,

    dans lequel les deux capteurs de température (11a, b) de chaque paire appariée ou les trois capteurs de température (11a, b) du trio apparié sont vérifiés pour fournir des valeurs de mesure stables et vérifiés pour avoir une valeur de temps de réponse déterminée individuellement ($T_{0.5}$) dans une plage prédéterminée de valeurs de temps de réponse.

17. Utilisation d'une paire appariée de deux capteurs de température (11a, b) ou d'un trio apparié de trois capteurs de température (11a, b), selon la revendication 15, pour un compteur d'énergie thermique (1), dans laquelle les deux capteurs de température (11a, b) de la paire appariée ou les trois capteurs de température (11a, b) du trio apparié sont vérifiés pour fournir des valeurs de mesure stables et vérifiés pour avoir une valeur de temps de réponse déterminée individuellement ($T_{0.5}$) dans une plage prédéterminée de valeurs de temps de réponse.

## Fig. 1a

## Fig. 1b

Fig. 2a

Fig. 2b

Fig. 2c

Fig. 3

Fig. 4

**10°C Bath 45a,b**

Fig. 5a

**75°C Bath 45c,d**

Fig. 5b

**EP 4 368 956 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2994724 B1
- US 6225141 B1
- US 8851744 B1
- US 2007268952 A1